# EUROPEAN PATENT APPLICATION

(11) **EP 4 714 518 A1**
(43) Date of publication of application: **25.03.2026**
(21) Application number: 24201529.5
(22) Date of filing: 20.09.2024
(51) Int. Cl.: B01D 1/00, B01D 1/22, B01D 5/00, C02F 1/08, C02F 1/14, B01D 3/34, C02F 103/08

(54) **A DESALINATION UNIT AND A PLANT FOR TREATING SALTED WATER AND PRODUCING SALT**

(71) Applicant: Planet S.r.l., 25128 Brescia (IT)
(72) Inventor: MOJZIS, Marek, 25128 Brescia (IT); COSTANZO, Lorenzo, 25128 Brescia (IT); ZECCA, Alessandro, 25128 Brescia (IT); VILLA, Alessandro, 25128 Brescia (IT)
(74) Representative: Dondi, Silvia

(57) **Abstract**

A desalination unit (1) comprising at least:
- a first chamber (2) for collecting and channelling salted water in at least one channel (3) obtained in the first chamber (2);
- first injecting means configured to inject within the first chamber (2) a first airflow having a temperature comprised in the range between 20°C and 130°C;
- a second chamber (5) for the condensation of water.

## Description

The present invention is relative to a desalination unit and to a plant for treating salted water and producing salt.

The invention finds application in the technical field of seawater desalination and irrigation or in the treatment of brackish water.

Desalination technologies have experienced significant development over time, offering a wide range of methods to obtain fresh water from saline sources. Some of the most common methods include reverse osmosis, thermal desalination, membrane distillation, ion exchange, and multi-stage flash distillation. These technologies differ in mechanisms and applications, which impact their adoption and global spread.

Solar still solutions, even if less used, offer significant advantages.

As a matter of fact, these solutions operate without the need for external energy sources, rather directly using solar energy to evaporate and condense water, making it particularly suitable for remote or off-grid contexts. Despite lower efficiency compared to active methods (like reverse osmosis), solar still solutions offer benefits such as energy efficiency, economic convenience, and simplicity of design and operation. In these solutions the direct solar radiation from the sun is used to desalinate salted water, based on evaporation and condensation process. A solar still consists in a basin that is fed with saline water. The still is covered with a transparent glass so that solar energy may radiate through it. Upon being hit by radiation, the saline water starts to evaporate. The water vapour then condenses on the glass cover, and the condensate is collected.

Solar stills solutions are mainly used in emergency contexts, like remote lands, developing countries, rural lands, or small communities, since they achieve poor volume of distilled water.

Indeed, higher volumes demand higher evaporating surfaces, thus higher bulk of the whole plant.

In addition, the disposal of the brine produced by the evaporation of water is an environmental concern. Usually, the brine is reintroduced into the sea, generating a high environmental impact.

From EP 4249827 it is known a passive solar still unit comprising a chamber for collecting water and delimited by a case with a transparent wall. The case has an inlet for water to be treated, an outlet for treated water and another outlet for brine. Inside the chamber it is arranged a corrugated plate and a serpentine path for the water is obtained, thus increasing evaporating efficiency.

There is still felt the need to develop trade-off solutions between high performances and high dimensions/costs.

In this context, the technical task at the basis of the present invention is to propose a desalination unit and a plant for treating salted water and producing salt, which overcome the problems of the prior art cited above. In particular, the object of the present invention is to provide a desalination unit having a higher thermal efficiency than prior art solutions.

Another object of the present invention is to provide a desalination unit which is easier to be maintained and cleaned over time.

Another object of the present invention is to provide a desalination unit and a plant for treating salted water and producing salt, both having a reduced environmental impact over prior art solutions.

The stated technical task and specified aims are substantially achieved by a desalination unit comprising at least:
- a first chamber for collecting and channelling salted water in at least one channel obtained in the first chamber (2);
- first injecting means configured to inject within the first chamber a first airflow having a temperature comprised in the range between 20°C and 130°C;
- a second chamber for the condensation of water.

In one embodiment of the invention, the desalination unit further comprises a transparent cover and a first corrugated sheet which delimit the first chamber.

The first corrugated sheet defines a plurality of channels.

Preferably, each channel has a linear development.

In particular, the channels are mutually parallel.

In one embodiment of the invention, the transparent cover is an insulated transparent plane, and the first corrugated sheet is made of a metal or a metal alloy.

In one embodiment of the invention, the desalination unit further comprises:
- a first panel having a corrugated surface and a flat surface; and
- a second corrugated sheet.

The corrugated surface of the first panel is counter shaped to the first corrugated sheet and supports the first corrugated sheet.

The second chamber is delimited by the flat surface of first panel and the second corrugated sheet.

For example, the first panel is made of an insulated material and the second corrugated sheet is made of metal or metal alloy.

In one embodiment of the invention, the desalination unit further comprises:
- a third corrugated sheet which is identical to the second corrugated sheet and is arranged overturned with respect to the second corrugated sheet so as to delimit a plurality of cooling channels therebetween;
- second injecting means configured to inject within the cooling channels a second airflow having a temperature comprised between 2°C and 20°C.

Preferably, the desalination unit further comprises a second panel made of an insulated material. The second panel has a corrugated surface which is counter shaped to the third corrugated sheet and supports the third corrugated sheet.

For example, the third corrugated sheet is made of metal or metal alloy.

In one embodiment of the invention, the desalination unit further comprises a cleaning system for cleaning the first chamber.

The cleaning system comprises at least:
- a plurality of strips laying on the first corrugated sheet, each strip being arranged in one of the channels; and
- a plurality of shuttle device, each being arranged within one of said channels and supporting one of said strips and a blade (10).

Each shuttle device is linearly movable along the corresponding channel. Preferably, the cleaning system further comprises a couple of parallel belts for each channel.

The couple of parallel belts are fixed to the corresponding shuttle device supporting the corresponding strip.

For example, each strip is sawn or attached on the two parallel belts of its channel.

For example, the strips are made of fabric or polyester or wool or aramidic fibers.

The stated technical task and specified aims are substantially achieved by a plant for treating salt water and producing salt, comprising:
- a first stage which comprises at least one desalination unit according to the present invention;
- a second stage arranged in series to the desalination unit, with the second stage being arranged downstream the desalination unit.

In one embodiment of the invention, the second stage comprises:
- an upper layer with protrusions obtained on an upper surface of the upper layer, said protrusions defining a serpentine path for air;
- a bottom layer parallelly arranged below the upper layer and distanced from the upper layer, wherein the bottom layer consists of a corrugated sheet;
- an upper cover which is placed above the upper layer so as to delimit an upper chamber, said upper cover being made of an insulated transparent plane.

Further characteristics and advantages of the present invention will more fully emerge from the non-limiting description of a preferred but not exclusive embodiment of a desalination unit and of a plant for treating salted water and producing salt, as illustrated in the accompanying drawings in which:
- figure 1 illustrates a desalination unit, according to the present invention, in a perspective view;
- figure 2 illustrates the desalination unit of figure 1, in a lateral view;
- figure 3 illustrates the desalination unit of figure 1, in a different perspective view;
- figure 4 illustrates an enlarged view of a part (second chamber) of the desalination unit of figure 1;
- figure 5 is an exploded view of a layered structure of a desalination unit, according to the present invention;
- figure 6 is an assembled view of the layered structure of figure 5;

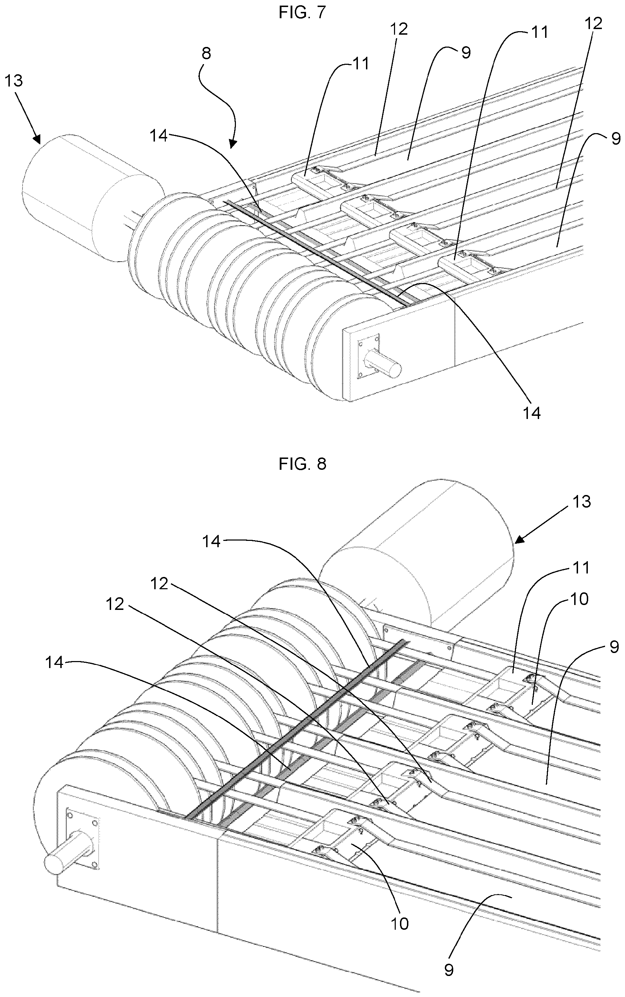

- figures 7, 8 and 9 are different perspective view of a part (cleaning system) of the desalination unit, according to the present invention;
- figure 10 illustrates a plant for treating salt water and producing salt, according to the present invention, in a perspective view;
- figure 11 illustrates a part (second stage) of the plant of figure 10, in an exploded view;
- figure 12 illustrates the path of the air in the upper chamber of the second stage of figure 11.

With reference to the figures, number 1 indicates a desalination unit, in this context also shortly referred to as "unit".

The unit 1 comprises at least:
- a first chamber 2 for collecting and channelling salted water in at least one channel 3 obtained in the first chamber 2;
- first injecting means configured to inject within the first chamber 2 a first airflow having a temperature comprised between 20°C and 130°C;
- a second chamber 5 for the condensation of water.

Preferably, in the first chamber 2 are obtained a plurality of channels 3. According to one embodiment, illustrated and described herewith, the first chamber 2 is delimited by a transparent cover 20 and a first corrugated sheet 21.

In particular, the transparent cover 20 is planar.

According to a preferred embodiment, the transparent cover 20 is an insulated transparent plane.

In one example, the transparent plane 20 is made of a double-glazed glass in order to prevent cooling inside the channels 3.

The first corrugated sheet 21 defines the channels 3 of the plurality of channels 3.

Preferably, each channel 3 has a linear development and all the channels 3 are mutually parallel.

In particular, each channel 3 has a substantially linear development along a direction which is parallel to a longitudinal extension A-A of the unit 1. The first corrugated sheet 21 is made of a metal or a metal alloy. Possible materials used for the first corrugated sheet 21 are Aluminium and stainless steel.

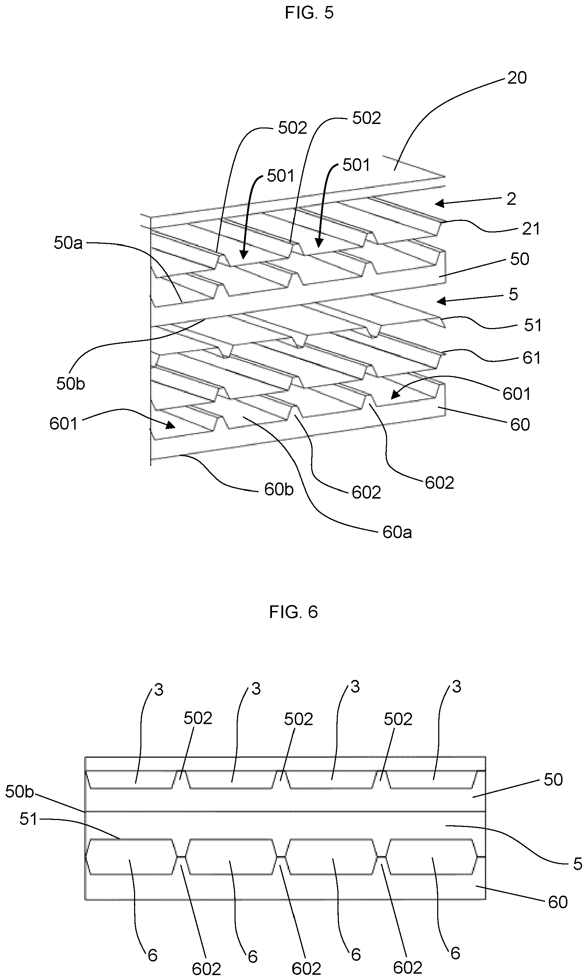

According to one embodiment, illustrated in figures 5 and 6, the second chamber 5 is delimited by a first panel 50 and a second corrugated sheet 51.

In particular, the first panel 50 is made of an insulated material. Examples of materials used for the first panel 50 are: rockwool, polyurethane, glass wool, biobased material such as cork, bark, mycelium.

In particular, the first panel 50 has a corrugated surface 50a and a flat surface 50b.

The corrugated surface 50a comprises grooves 501 alternating to peaks 502. The grooves 501 and the peaks 502 have linear development and are mutually parallel.

The corrugated surface 50a of the first panel 50 supports the first corrugated sheet 21.

In particular, the corrugated surface 50a of the first panel 50 is counter shaped to the first corrugated sheet 21 so that the first corrugated sheet 21 lies on the corrugated surface 50a of the first panel 50. Each groove 501 of the corrugated surface 50a of the first panel 50 corresponds to one of the channels 3 of the first corrugated sheet 21.

In particular, the second chamber 5 is delimited by the flat surface 50b of first panel 50 and the second corrugated sheet 51.

The second corrugated sheet 51 is made of metal or metal alloy. Possible materials used for the second corrugated sheet 51 are Aluminium, and stainless steel.

According to the embodiment illustrated herewith, the unit 1 further comprises:
- a plurality of cooling channels 6; and
- second injecting means configured to inject within the cooling channels 6 a second airflow having a temperature comprised between 2°C and 20°C.

In particular, the cooling channels 6 are delimited by the second corrugated sheet 51 and a third corrugated sheet 61.

Preferably, the second and the third corrugated sheets 51, 61 are identical and are arranged so that one is overturned with respect to the other. In practice, the second and the third corrugated sheet 51, 61 face one another with each peak of the third corrugated sheet 61 being in contact with one of the peaks of the second corrugated sheet 51 and with each groove of the third corrugated sheet 61 facing and being distanced from one of the grooves of the second corrugated sheet 51 so at to define the cooling channels 6.

In other words, the cooling channels 6 are mutually parallel channels obtained by overlapping the second corrugated sheet 51 on the third corrugated sheet 61 which is overturned with respect to the second corrugated sheet 51.

The third corrugated sheet 61 is made of metal or metal alloy. Possible materials used for the third corrugated sheet 61 are Aluminium and stainless steel.

Preferably, the unit 1 further comprises a second panel 60 made of an insulated material. In particular, the second panel 60 has a corrugated surface 60a and a flat surface 60b.

The corrugated surface 60a comprises grooves 601 alternating to peaks 602. The grooves 601 and the peaks 602 have linear development and are mutually parallel.

The corrugated surface 60a of the second panel 60 supports the third corrugated sheet 61.

In particular, the corrugated surface 60a of the second panel 60 is counter shaped to the third corrugated sheet 61 so that the third corrugated sheet 61 lies on the corrugated surface 60a of the second panel 60. Each groove 601 of the corrugated surface 60a of the second panel 6 corresponds to one of the cooling channels 6.

Examples of materials used for the second panel 50 are: rockwool, polyurethane, glass wool.

In particular, the second panel 60 is identical to the first panel 50 for shape, dimensions, and material.

In the embodiment shown in figures 5 and 6, the first chamber 2, the second chamber 5 and the cooling channel 6 are arranged to form a layered structure.

The unit 1 further comprises a cleaning system 8 for cleaning the first chamber 2, in particular for removing salt deposited on the first corrugated sheet 21 or incrusted thereon as a result of water evaporation.

In fact, salt deposits may gradually grow over time, and this causes reflection of solar radiation out of the evaporation surface, which is undesirable since the temperature and efficiency decrease.

According to one embodiment, the cleaning system 8 comprises at least:
- a plurality of strips 9 laying on the first corrugated sheet 21; and
- a plurality of blades 10.

In particular, each strip 9 is arranged in one of the channels 3.

Preferably, each strip 9 has a linear extension throughout the corresponding channel 3 and is configured to linearly slide within the channel 3 on the first corrugated sheet 21.

In particular, each strip 9 is actuated according to a linear movement along a direction which is parallel to the longitudinal extension A-A.

In other embodiments, not shown, the strips 9 are substituted by cables or ropes laying on the first corrugated sheet 21.

Each blade 10 is also arranged in one of the channels 3. In particular, the blade 10 is transversally arranged with respect to the linear extension of the channel 3.

Each blade 10 is movable within the channel 3 so as to scrape the surface of the first corrugated sheet 21.

In each channel 3 is arranged a shuttle device 11 configured to support the corresponding blade 10.

Preferably, each shuttle device 11 is dimensioned so as to fit into the corresponding channel 3.

In particular, the blade 10 is integrally mounted on the shuttle device 11. Possible materials used for the blade 10 are stainless steel, polycarbonates, nylon and their mixtures with glass fiber, carbon fiber and other heat-resistant materials.

In addition, a couple of parallel belts 12 is fixed to each shuttle device 11 and is arranged so as to support the corresponding strip 9. The strip 9 is fixedly mounted on the two belts 12 of the couple. For example, the strip 9 is sawn or attached on the two belts 12.

The two belts 12 are actuated by motorized means 13 of the known type. Actuation of the two belts 12 determines the linear movement of the shuttle device 11 (and of the integral blade 10) along the corresponding channel 3.

In other embodiments, the belts 12 are substituted by cables or ropes.

According to one embodiment, the shuttle device 11 is made of one of the following materials: stainless steel, aluminium, metal alloys or other materials that are resistant to heat and salinity. The shuttle device 11 supports a load element which is made of stainless steel or other heat and salinity-resistant materials. This results in a high stability and pressure during cleaning.

Alternatively, the shuttle device 11 is a monolithic block made of polycarbonates and their mixtures with glass fiber, carbon fiber and other heat-resistant materials, which further increases stability and pressure. According to one aspect of the invention, the strips 9 are made of a rough material, in particular a porous material, preferably fabric. More preferably, the strips 9 are made of a black coloured fabric, for example a black felt. Alternatively, the strips 9 are made of one of the following materials: polyester, wool, aramidic fibers or other heat-resistant materials.

The cleaning system 8 preferably comprises one or more belt brushes 14 which are arranged at one end of the unit 1 and are transversally positioned with respect to the longitudinal extension A-A so as to brush all the belts 12.

For examples, the belt brushes 14 may be arranged above and/or under the belts 12 so as to clean the upper surface and/or the lower surface of the belts 12.

In another embodiment of the invention, not shown, the cleaning system 8 further comprises one or more strip brushes which are arranged at the end of the unit 1 and are transversally positioned with respect to the longitudinal extension A-A so as to brush the strips 9.

Thus, the strips 9 are cleaned as they are being rolled up. For examples, the brushes may be arranged above and/or under the strips 9 so as to clean the upper surface and/or the lower surface of the strips 9.

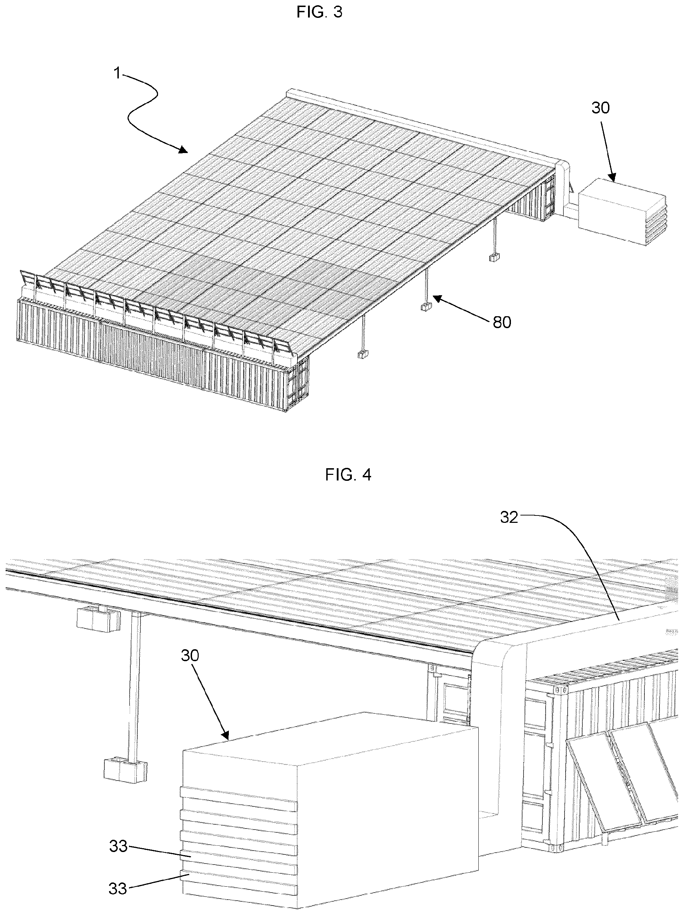

According to another embodiment, shown in figure 4, the second chamber 5 is delimited by a box 30 having an inlet for receiving moist air from the first chamber 2. For example, the inlet of the box 30 is connected to the first chamber 2 by a pipe 32.

In particular, the box 30 houses a plurality of overlapped layers 33 which promote condensation. The layers 33 have substantially a planar development and are overlapped according to a horizontal or vertical configuration.

The layers 33 can be made of 3D fabric, such as polyester.

The box 30 may house packing material from oil distillation columns, as a wire mesh, or structured packing, made of stainless steel or aluminium. Alternatively, the layers 33 may be made of stainless-steel perforated pillow cooling plates and aluminium or metal or metal alloy.

Within the box 30 there may also be arranged a metal radiator or plate. The moist air received from the inlet encounters the layers 33 and the metal radiator (if present) and condenses.

The condensed water is collected at the bottom of the box 30 and is received by a first outlet (not shown) of the box 30.

Dried air may also be extracted from the box 30 by means of a second outlet (not shown).

In this embodiment, the second chamber 5 is located at a predefined distanced from the first chamber 2, thus there is no layered structure.

In addition, cooling means for cooling the moist air inside the second chamber 5 are housed inside the box 30 or they may be located close to the box 30. This cooling means may be of the active or passive type.

The unit 1 has an inlet for water to be treated. The inlet emerges into the first chamber 2 so as to feed the first chamber 2 with water to be treated. According to an application of the invention, the inlet receives salted water or brackish water from a tank.

Before entering the unit 1, the salted water may be pre-heated so as to reach a temperature in the range from 55° to 98°C, for example by means of a passive system (like a solar water heater) or an active system (for example an electric heater). This allows an increase in the evaporation efficiency.

The unit 1 comprises also a first outlet for treated water (i.e., distilled water) and a second outlet for brine, obtained by the evaporation process. The first outlet is in fluid communication with the second chamber 5 so as to receive the treated water.

In particular, the inlet is located at an opposite end of the unit 1 relative to the first outlet and the second outlet.

When in use, the unit 1 is arranged on a terrain or a floor with the first chamber 2 being the upper chamber so that the transparent cover 20 is exposed to the solar radiation.

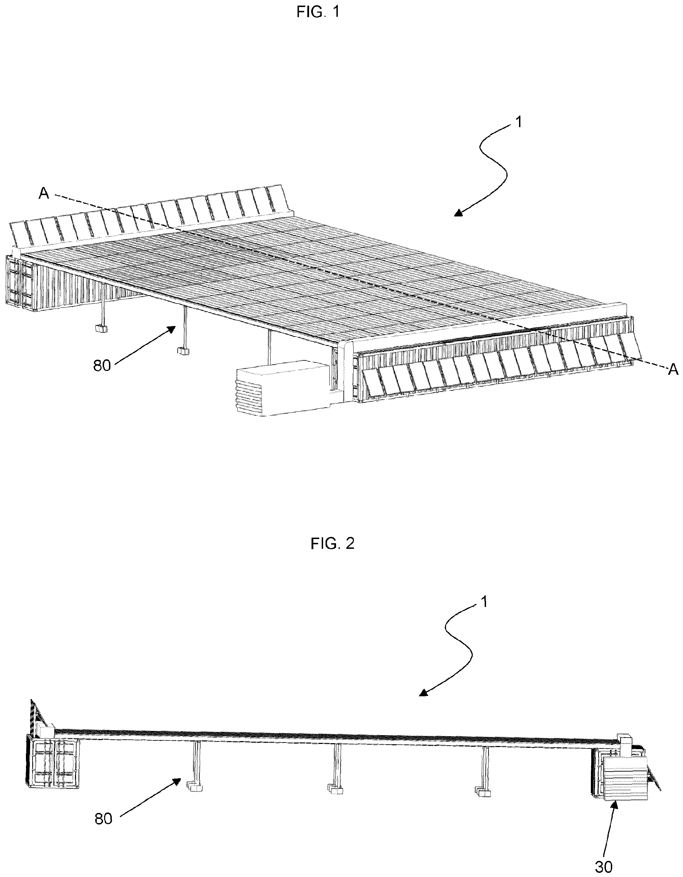

According to one aspect of the invention, the unit 1 comprises a frame 80 adapted to be positioned on the terrain. In particular, in an installed configuration, the unit 1 is arranged on the frame 80 so that unit 1 is inclined with respect to the terrain. This is shown in figure 2.

The inlet is located at a higher level than the first outlet.

Thus, the salted water fed into the first chamber 2 flows along the channels 3 of the first chamber 2 under the gravity force for the entire length of the channels 3.

Using gravity allows avoiding the use of pumps to continuously feed the system, making it more energy efficient.

In addition, the treated water which condenses in the second chamber 5 flows under the gravity force and gets to the first outlet.

The functioning of the desalination unit according to the present invention is described below.

The salted water is introduced into the first chamber 2 by means of the inlet and starts flowing in the channels 3.

Flowing in channels 3, the salted water is exposed to the solar radiation passing through the transparent cover 20.

In fact, the transparent cover 20, in particular made of a double-glazed glass, allows the solar radiation to arrive in the first chamber 2 so as to heat up the salted water and the first airflow, thus causing the evaporation. As said, a first airflow having a temperature comprised between ambient temperature (circa 20°C) and 130°C is injected into the first chamber 2. In this context, the first airflow is also referred to as "hot airflow".

The hot airflow, which is further heated by solar radiation, serves for accelerating the evaporation process.

Preferably, the hot airflow is injected into the first chamber 2 in an opposite direction with respect to the flow of the salted water flowing in the channels 3. This increases the evaporation efficiency.

Alternatively, the hot airflow may be injected into the first chamber 2 in the same direction of the flow of the salted water flowing in the channels 3.

In addition, the transparent cover 20 serves to prevent cooling inside the channels 3.

Thanks to the strips 9 deposited on the first corrugated sheet 21, the flow of water within the channels 3 is slowed down, thus increasing the time of exposure to the solar radiation and the efficiency of the evaporation process.

In addition, the strips 9 increase the evaporation surface so as to increase efficiency.

In addition, black strips 9 allow to absorb the solar radiation, thus promoting evaporation. The strips 9 also serve for insulation purposes. The evaporation process thus generates a moist air which is pushed into the second chamber 5 where it condenses.

As already stated, in the illustrated embodiment a second airflow having a temperature of 2°-20°C is injected into the cooling channels 6. In this context, the second airflow is also referred to as "cool airflow".

In particular, the cool airflow cools down the second corrugated sheet 51 and thus promotes the condensation of water in the second chamber 5. The condensed water, which is distilled water for example, is channelled into the grooves of the second corrugated sheet 51 and is then collected at the bottom of the unit 1, exiting from the first outlet.

In another embodiment (not shown), instead of a second airflow, condensation in the second chamber 5 is obtained by means of a pillow cooling plate wherein a coolant (for example water or another type of fluid) is made to circulate.

For example, the pillow cooling plate is made of stainless steel and the coolant is maintained at a temperature between 2°C and 12°C. This achieves a high-efficient cooling.

In the first chamber 2 there may be a part of salted water or brine which does not evaporate and is collected at the bottom of unit 1, exiting from the second outlet.

Cleaning of the first chamber 2 may be performed periodically by controlling the motorized means 13.

When the belts 12 are pulled and rolled up towards the bottom of the unit 1 by the motorized means 13, the corresponding shuttle device 11 advances along the channel 3 so that the blade 10 scrapes the surface of the first corrugated sheet 21 and thus cleans the channel 3 from salt incrustations and/or deposits.

During the movement of the shuttle device 11 in the corresponding channel 3, the strip 9 (which may contain brine and crystallized salts) is squeezed.

When the shuttle device 11 has spanned the whole channel 3, the belts 12 are pulled in the opposite direction so as to return to the initial configuration.

The unit 1 proposed herewith may be installed on a roof of a building with the transparent cover 20 exposed directly to the solar radiation. This installation is also thermally efficient for the building since the roof of the building results to be properly insulated.

Thus, the unit 1 plays both the role of desalination unit and insulation unit for the roof on which it is installed.

A plurality of units 1 may also be arranged in series so as to increase the rate of production depending on the needs.

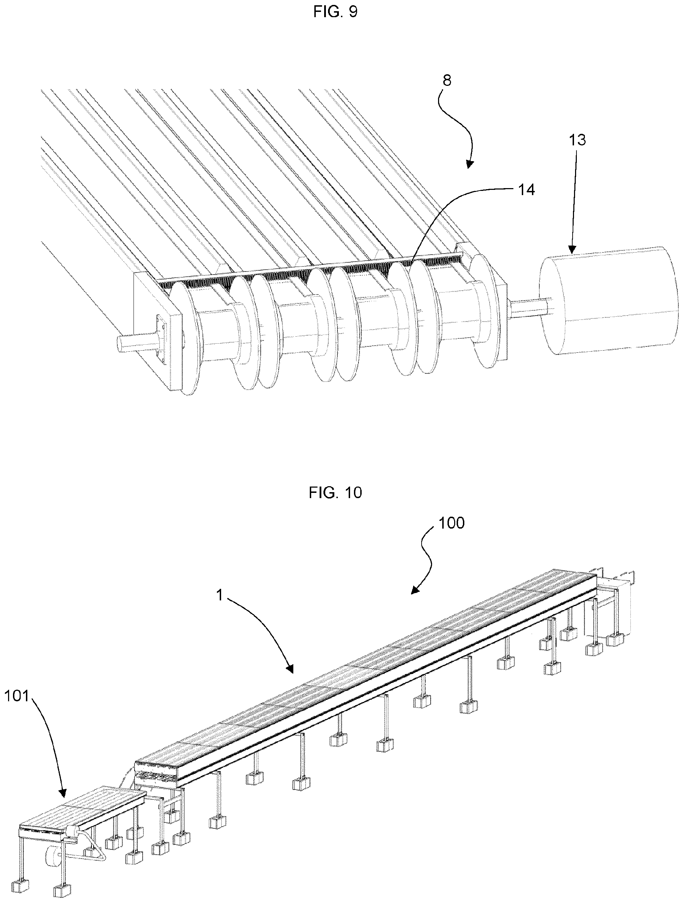

With reference to figure 10, number 100 indicates a plant for treating salt water and producing salt.

The plant 100 comprises at least two stages, which are arranged in series. A first stage of the plant 100 comprises at least one desalination unit 1.

In the example illustrated herewith, the first stage of the plant 100 is shown to comprise only one desalination unit 1.

In other examples, not shown, the first stage of the plant 100 may comprise more desalination units 1 arranged in cascade.

A second stage of the plant 100, indicated with number 101, is arranged in series with the desalination unit 1.

Preferably, the second stage 101 is directly connected to the desalination unit 1 which is located upstream.

In one example, the second stage 101 is in fluid communication with the second outlet of said unit 1 in order to receive the brine.

There can be also envisaged a recirculating device (not shown) upstream the second stage 101 which is configured to receive the brine from the desalination unit 1 and to concentrate it to a predefined level before introducing the brine into the second stage 101.

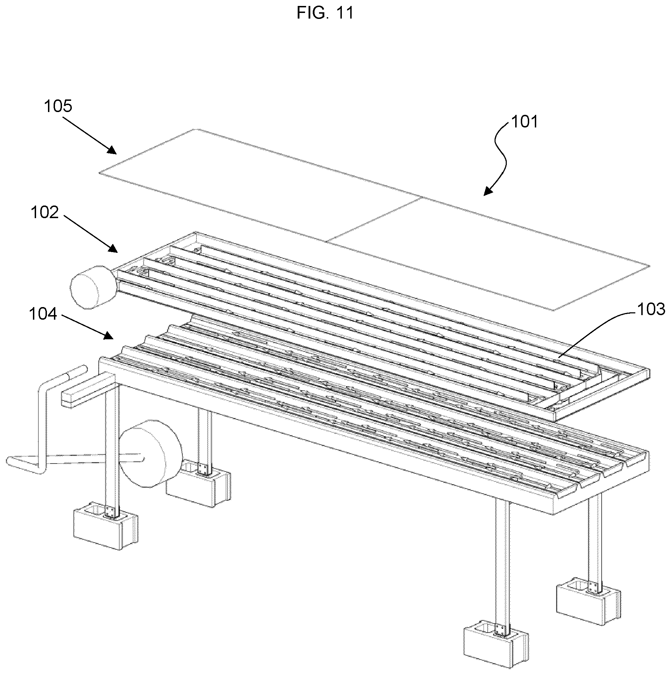

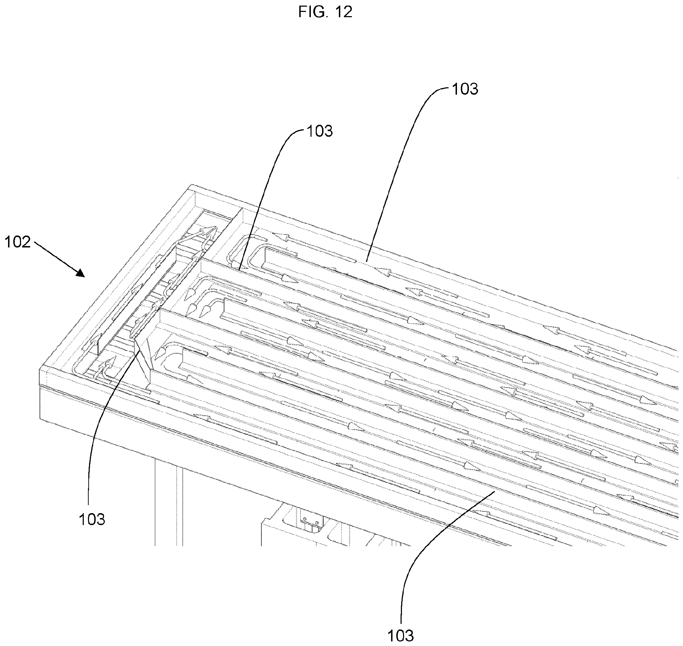

According to one embodiment, shown in figure 11, the second stage 101 comprises a substantially planar layer 102 inside which protrusions 103 are obtained, which emerge from an upper surface of the layer 102, which is also referred to as "upper layer". The protrusions 103 defines a passage or path for air. In particular, the protrusions 103 are arranged in order to obtain a serpentine path, as shown in figures 11 and 12.

Air is blown in the serpentine path from one end of the first layer 102 to another end of the first layer 102, while being heated up. Air then flows towards a chamber which is located below the upper layer 102 and is delimited by the upper layer 102 and by another layer 104, which is referred to as the "bottom layer". The bottom layer 104 is arranged parallelly below the upper layer 102.

In particular, the bottom layer 104 consists of a corrugated sheet, similar in shape and material to the corrugated sheet of the desalination unit 1.

The second stage 101 also comprises an upper cover 105 which is placed above the upper layer 102 so as to delimit an upper chamber.

The upper cover 105 is made of an insulated transparent plane to allow sun radiation and at the same time to insulate the upper chamber.

In one example, the upper cover 105 is made of a double-glazed glass. The second stage 101 is configured to provide the first airflow (i.e. the hot airflow) which is injected into the first chamber 2 of the desalination unit 1. In addition, the second stage 101 is configured to produce salt from a further evaporation of water from the brine which is collected from the desalination unit 1.

In one embodiment, the second stage 101 comprises a cleaning system for cleaning the bottom layer 104 from salt incrustation which grow over time.

The cleaning system used in the second stage 101 is similar to the cleaning system 8 which has been described for the desalination unit 1.

Preferably, the cleaning system of the second stage 101 comprises a plurality of shuttle devices, one for each of the channels defined by the corrugation of the bottom layer 104. Each shuttle device supports a corresponding blade. Strips are not present in the cleaning system of the second stage 101.

The characteristics of a desalination unit and of a plant for treating salted water and producing salt, according to the present invention, are clear, as are the advantages.

In particular, the hot airflow injected in the first chamber increases the evaporation efficiency and serves also to move the moist air toward the second chamber where condensation occurs.

In addition, the desalination unit is easily cleaned and maintained by means of the slidable shuttle devices which move along the channels. The desalination unit is a simple and compact module, which may be easily assembled and installed and is adaptable to different backgrounds. In addition, more desalination units may be arranged in cascade so as to increase the rate of production depending on the needs.

The proposed plant, which combines the desalination with the accumulation of brine and productions of salt, allows providing hot airflow to the desalination unit for evaporating the water and processing the brine, preventing its discharge into the environment.

In the second stage of the plant, which may also be referred to as a "salt factory", the air that circulates serves for promoting evaporation to leave salt behind, carries the moisture into the desalination chamber and further into the condensation chamber.

Thus, the resulting moving air conveys moisture both from the salt factory and the one from the desalination chamber.

This results in a higher moisture content and therefore increases the efficiency of the overall process.

## Claims

1. A desalination unit (1) comprising at least:
- a first chamber (2) for collecting and channelling salted water in at least one channel (3) obtained in the first chamber (2);
- first injecting means configured to inject within the first chamber (2) a first airflow having a temperature comprised in the range between 20°C and 130°C;
- a second chamber (5) for the condensation of water.

2. The desalination unit (1) according to claim 1, further comprising a transparent cover (20) and a first corrugated sheet (21) which delimit the first chamber (2), said first corrugated sheet (21) defining a plurality of channels (3).

3. The desalination unit (1) according to claim 2, wherein each channel (3) has a linear development, said channels (3) being mutually parallel.

4. The desalination unit (1) according to claim 2 or 3, wherein the transparent cover (20) is an insulated transparent plane, and the first corrugated sheet (21) is made of a metal or a metal alloy.

5. The desalination unit (1) according to any one of the claims 2 to 4, further comprising:
- a first panel (50) having a corrugated surface (50a) and a flat surface (50b); and
- a second corrugated sheet (51),
the corrugated surface (50a) of the first panel (50) being counter shaped to the first corrugated sheet (21) and supporting the first corrugated sheet (21), said second chamber (5) being delimited by the flat surface (50b) of first panel (50) and the second corrugated sheet (51).

6. The desalination unit (1) according to claim 5, wherein the first panel (50) is made of an insulated material and the second corrugated sheet (51) is made of metal or metal alloy.

7. The desalination unit (1) according to claim 5 or 6, further comprising:
- a third corrugated sheet (61) which is identical to the second corrugated sheet (51) and is arranged overturned with respect to the second corrugated sheet (51) so as to delimit a plurality of cooling channels (6) therebetween;
- second injecting means configured to inject within the cooling channels (6) a second airflow having a temperature comprised between 2°C and 20°C.

8. The desalination unit (1) according to claim 7, further comprising a second panel (60) made of an insulated material, said second panel (60) having a corrugated surface (60a) which is counter shaped to the third corrugated sheet (61) and supports the third corrugated sheet (61).

9. The desalination unit (1) according to claim 7 or 8, wherein the third corrugated sheet (61) is made of metal or metal alloy.

10. The desalination unit (1) according to any one of the claims 2 to 9, further comprising a cleaning system (8) for cleaning the first chamber (2), said cleaning system (8) comprising at least:
- a plurality of strips (9) laying on the first corrugated sheet (21), each strip (9) being arranged in one of the channels (3); and
- a plurality of shuttle device (11) each being arranged within one of said channels (3) and supporting one of said strips (9) and a blade (10), each shuttle device (11) being linearly movable along the corresponding channel (3).

11. The desalination unit (1) according to claim 10, wherein said cleaning system (8) further comprises a couple of parallel belts (12) for each channel (3), said couple of parallel belts (12) being fixed to the corresponding shuttle device (11) supporting the corresponding strip (9).

12. The desalination unit (1) according to claim 11, wherein each strip (9) is sawn or attached on the two parallel belts (12) of its channel (3).

13. The desalination unit (1) according to any one of claims 10 to 12, wherein the strips (9) are made of fabric or polyester or wool or aramidic fibers.

14. A plant (100) for treating salt water and producing salt, comprising:
- a first stage which comprises at least one desalination unit (1) according to any one of the preceding claims;
- a second stage (101) arranged in series to the at least one desalination unit (1), said second stage (101) being downstream the desalination unit.

15. The plant (100) of claim 14, wherein the second stage (101) comprises:
- an upper layer (102) with protrusions (103) obtained on an upper surface of the upper layer (102), said protrusions (103) defining a serpentine path for air;
- a bottom layer (104) parallelly arranged below the upper layer (102) and distanced from the upper layer (102), said bottom layer (104) consisting of a corrugated sheet;
- an upper cover (105) which is placed above the upper layer (102) so as to delimit an upper chamber, said upper cover (105) being made of an insulated transparent plane.
